# EUROPÄISCHE PATENTSCHRIFT

(11) **EP 1 643 191 B1**
(45) Veröffentlichungstag und Bekanntmachung des Hinweises auf die Patenterteilung: **15.06.2016**
(21) Anmeldenummer: 05021421.2
(22) Anmeldetag: 30.09.2005
(51) Int. Cl.: C02F 1/68, F24D 19/00

(54) **Vorrichtung und Verfahren zur Behandlung von Heizungswasser**
Apparatus and method for treating heating water
Dispositif et procédé pour le traitement d'eau de chauffage

(30) Priorität: 01.10.2004 DE 202004015423 U
(43) Veröffentlichungstag der Anmeldung: 05.04.2006
(73) Patentinhaber: Judo Wasseraufbereitung GmbH, D-71364 Winnenden (DE)
(72) Erfinder: Zadeh, Farid Ghasem, 71522 Backnang-Waldrems (DE)
(74) Vertreter: Kohler Schmid Möbus Patentanwälte

(56) Entgegenhaltungen:
- EP-A- 0 711 959
- WO-A-99/36732
- DE-A1- 10 060 164
- GB-A- 1 331 603
- GB-A- 2 162 164
- GB-A- 2 377 265
- US-A- 3 000 365
- LENOIR-VILLION D: "LES INHIBITEURS DE CORROSION" CFP CHAUD FROID PLOMBERIE, EDITIONS PARISIENNES. PARIS, FR, Nr. 614, Juni 1999 (1999-06), Seiten 51-54, XP000827447 ISSN: 0750-1552

## Beschreibung

Die Erfindung betrifft eine Vorrichtung zur Behandlung von Heizungswasser mit einem Warmwasserkreislauf, ein Adapter und einem Druckbehälter, in dem sich Härtestabilisationsmittel und/oder Korrosionsschutzmittel befinden, wobei der Druckbehälter zum Behandeln des Heizungswassers mit dem Warmwasserkreislauf über den Adapter verbunden ist, sowie ein Verfahren zur Behandlung von Heizungswasser mit einer solchen Vorrichtung.

Eine solche Vorrichtung ist bekannt aus dem Firmenprospekt "JUDO-Thermodos" der Firma Judo Wasseraufbereitung GmbH aus dem Jahr 1999.

In der US 3 000 365 A ist eine Vorrichtung mit den Merkmalen gemäß des Oberbegriffs von Anspruch 1 beschrieben.

Das Be- und Nachfüllen einer Heizungsanlage nach DIN EN 1717 erfolgt heute über einen Festanschluss mit einem Rohrtrenner als Sicherungseinrichtung, um das Rückfließen von Heizungswasser in das Trinkwasser und damit eine Verunreinigung des Trinkwassers zu verhindern. Ein Druckminderer sorgt zusätzlich für einen konstanten Betriebsdruck. Solche Fülleinrichtungen für Heizungsanlagen sind beispielsweise im Firmenprospekt "HEIFI-TOP + HEIFI-Fül" der Firma Judo Wasseraufbereitung GmbH aus dem Jahr 2003 beschrieben.

Beim Betrieb einer Heizungsanlage können mit der Zeit Störungen durch Kalk, Korrosion und Rostschlamm auftreten. Es ist deshalb in vielen Fällen notwendig, das Heizungsfüllwasser zu konditionieren. Hierzu müssen in der Regel Chemikalien zur Stabilisierung in den Warmwasser-Heizungskreislauf eingebracht werden. Dies kann mittels einer Handpumpe und Anschlussschlauch erfolgen, wie in dem oben genannten Firmenprospekt "JUDO-Thermodos" beschrieben. Hierzu kann der Schlauch über eine Überwurfmutter an den Füllanschluss des Heizungssystems angeschlossen werden.

Das Einfüllen von Chemikalien wie Härtestabilisationsmitteln und/oder Korrosionsschutzmitteln über einen provisorischen Schlauchanschluss ist jedoch unpraktisch. Außerdem besteht die Gefahr, dass der Schlauch bei hohem Druck abspringt oder platzt, was besonders unangenehm ist, da der Schlauch mit Chemikalien gefüllt ist. Darüber hinaus ist es nachteilig, dass durch das Anschließen des mit Luft gefüllten Schlauches Luft in die Heizungsanlage gelangt.

Aufgabe der vorliegenden Erfindung ist daher, oben genannte Nachteile zu vermeiden und eine Vorrichtung und ein Verfahren der eingangs genannten Art vorzustellen, mit denen Heizungswasser durch einfache und sichere Zugabe von Härtestabilisationsmitteln und/oder Korrosionsschutzmitteln aus einem Druckbehälter behandelt werden kann, ohne dass hierzu ein Umbau am Heizungssystem notwendig ist.

Diese Aufgabe wird erfindungsgemäß auf überraschend einfache, aber wirkungsvolle Weise durch eine Vorrichtung der eingangs genannten Art gelöst, bei der eine Auslassöffnung des Druckbehälters fluiddicht mit einer Einlassöffnung des Adapters verbunden ist, bei der ein Anfangsfülldruck der Härtestabilisationsmittel und/oder Korrosionsschutzmittel im Druckbehälter vor dem Verbinden des Druckbehälters mit dem Adapter bei mindestens 4 bar und ein Endfülldruck im Druckbehälter nach dem vollständigen Einbringen der Härtestabilisationsmittel und/oder Korrosionsschutzmittel in den Warmwasserkreislauf bei mindestens 2 bar liegt.

Durch den Endfülldruck von mindestens 2 bar ist gewährleistet, dass der Fülldruck im Druckbehälter auch nach dessen Entleerung noch größer ist als der Betriebsdruck in der Heizungsanlage, sodass der Druckbehälter vollständig entleert werden kann. Durch die vollständige Entleerung ist die dem Warmwasserkreislauf zudosierte Menge an Härtestabilisationsmittel und/oder Korrosionsschutzmittel genau definiert. Durch den Anfangsfülldruck von 6 bar kann darauf verzichtet werden, die erforderlichen Härtestabilisationsmittel und/oder Korrosionsschutzmittel über ein aufwendiges und teures Pumpensystem in den Heizkreislauf einzubringen. Auch besteht keine Gefahr mehr, dass über ein Pump-/Schlauchsystem störende Luft in das Heizungssystem gelangt oder Dosiermittel direkt an die Umwelt austreten kann.

Druckbehälter zur Abgabe von Chemikalien sind beispielsweise aus nachfüllbaren Gasfeuerzeugen oder zur Herstellung von Polyurethanschäumen bekannt, wie in DE 195 07 271 A1 und G 87 04 600 ausgeführt ist Bei der Verwendung solcher Druckbehälter zur sicheren und einfachen Dosierung von Härtestabilisationsmitteln und/oder Korrosionsschutzmitteln zur Konditionierung des Heizungsfüllwassers muss eine geeignete Anschlussmöglichkeit an den Warmwasserkreislauf zur Verfügung gestellt werden. Zu diesem Zweck ist der Adapter vorgesehen.

In einer bevorzugten Ausführungsform liegt der Anfangsfülldruck bei mindestens 8 bar und der Endfülldruck bei mindestens 3 bar. Durch einen höheren Endfülldruck wird sichergestellt, dass die Zeit, die zum Einbringen der als Härtestabilisationsmittel und/oder Korrosionsschutzmittel wirkenden Chemikalien benötigt wird, sich verkürzt. Ein höherer Anfangsfülldruck ermöglicht es, eine größere Menge an Chemikalien in dem Druckbehälter unterzubringen.

Besonders bevorzugt ist eine Ausführungsform, bei der die Härtestabilisationsmittel und/oder Konrosionsschutzmittel im Druckbehälter getrennt vom gasförmigen Treibmittel gelagert sind, beispielsweise in einem druckfesten Beutel wie in G 94 13 823 beschrieben. Dadurch werden nur die Härtestabilisationsmittel und/oder Korrosionsschutzmittel selbst nicht aber das gasförmige Treibmittel in den Warmwasserkreislauf eingespeist. Dies ist besonders wichtig, weil Gase im Heizungskrelslauf zu erheblichen Funktionsstörungen führen können. Als umweltfreundliches Treibmittel kann Druckluft verwendet werden.

Vorteilhaft sind handelsübliche Sprühdosen als Druckbehälter, in denen sich die Härtestabilisationsmittel und/oder Korrosionsschutzmittel getrennt vom Treibmittel und fertig konfektioniert befinden. Durch die fertige Konfektionierung in der Sprühdose entfällt der direkte Kontakt mit den Mitteln. Zudem sind solche Sprühdosen einfach und billig in ihrer Herstellung.

Eine weitere besonders bevorzugte Ausgestaltung der erfindungsgemäßen Vorrichtung zeichnet sich dadurch aus, dass der Druckbehälter ein Volumen von 200 ml bis 2000 ml, vorzugsweise zwischen 400 ml und 800 ml aufweist.

Druckbehälter mit derartigen Volumina sind als handelsübliche Standard-Sprühdosen billig erhältlich. Zudem sind Druckbehälter in dieser Größe sehr handlich und können ohne große Kraftaufwendung leicht an den Adapter angeschlossen werden.

Bei einer bevorzugten Ausführungsform befindet sich am Adapter ein Gewinde, das fluiddicht mit einer Öffnung am Warmwasserkreislauf verschraubt werden kann, Beispielsweise kann der Adapter so in ein in den Warmwasserkreislauf eingebautes T-Stück hineingeschraubt werden.

Ganz besonders bevorzugt ist dabei eine Weiterbildung dieser Ausführungsform, bei der das Gewinde in Form einer Überwurfmutter ausgestaltet ist. Auf diese Art und Weise lässt sich der Adapter einfach und schnell an eine Füllöffnung der Heizungsanlage anschrauben. Als Dichtelement kann beispielsweise ein handelsüblicher O-Ring dienen.

In einer weiteren Ausführungsform, besonders bei größeren Nennweiten, kann der Adapter auch über einen Flansch mit der Füllöffnung fluiddicht verbunden werden.

Eine weitere vorteilhafte Ausführungsform zeichnet sich dadurch aus, dass ein Fitting vorhanden ist, mit dem der Adapter und die Öffnung am Heizungssystem verpresst werden. Solche Fittings gibt es beispielsweise aus Kupfer oder Edelstahl.

Bei einer vorteilhaften Ausgestaltung der Erfindung befindet sich im Adaptergehäuse ein Rückflussverhinderer. Dadurch ist gewährleistet dass weder heißes Heizungswasser noch Behandlungschemikalien wie Härtestabilisationsmittel und/oder Korrosionsschutzmittel ungewollt aus dem Kreislaufsystem der Heizung austreten können. Dies ist besonders wichtig, wenn ein an der Füllöffnung vorhandener Kugelhahn während des Zudosierens von Chemikalien in das Heizungssystem geöffnet und nach Beendigung des Dosiervorgangs versehentlich noch offen sein sollte.

Bei einer vorteilhaften Ausführungsform ist an einer Einlassöffnung des Adapters ein Befüllstutzen vorgesehen, über den der Adapter mit dem Druckbehälter fluiddicht verbindbar ist. Der Befüllstutzen kann in eine Ventilöffnung am Druckbehälter gesteckt werden.

Bei einer alternativen, besonders vorteilhaften Ausführungsform ist an einer Auslassöffnung des Druckbehälters ein Befüllstutzen vorgesehen, über den der Adapter mit dem Druckbehälter fluiddicht verbindbar ist Bei handelsüblichen Sprühdosen befindet sich der Befüllstutzen am Sprühventil und kann direkt in eine sich am Adapter befindliche, passende Ventilöffnung gesteckt werden. Dadurch öffnet das Rückschlagventil der Sprühdose und deren Inhalt fließt durch den Adapter in das Heizungssystem. Es ist somit möglich, Chemikalien auf sichere und einfache Weise in den Warmwasser-Heizungskreislauf einzuführen. Die Gefahr einer Verschmutzung mit Chemikalien ist nahezu ausgeschlossen. Durch die schlauchlose Zudosierung wird außerdem keine störende Luft in das Heizungssystem eingebracht.

Bei einer bevorzugten Ausführungsform weist der Adapter ein starres Gehäuse auf. Das Gehäuse des Adapters kann aus einem Messingstutzen bestehen, prinzipiell sind jedoch auch andere metallische Werkstoffe sowie Kunststoffe denkbar.

Bei einer weiteren Ausführungsform umfassen die Härtestabilisationsmittel ein Polyphosphat und/oder ein Phosponat. Diese Stoffe sind besonders gut geeignet, um Kalkablagerungen auf den Rohrinnenwänden, Wärnetauscherflächen, Ventilen und Umwälzpumpen des Warmwasserkreislaufs zu vermeiden.

Bei einer Ausführungsform umfassen die Korrosionsschutzmittel mindestens einen Stoff aus den folgenden Stoffgruppen: Korrosionsinhibitoren, alkalisierende Stoffe, Sauerstoffbindemittel. Dispergiermittel. Stoffe dieser Stoffklassen sind geeignet, wirksam die Bildung von Rost zu verhindern und Rostablagerungen zu vermeiden.

Bei einer Weiterbildung dieser Ausführungsform umfassen die Korrosionsinhibitoren ein Amin und/oder ein Molybdat. Diese Stoffe bilden einen Schutzfilm auf den Innenwänden der Rohre des Warmwasserkreislaufs aus, der die Wände vor Rostbildung schützt.

Bei einer bevorzugten Weiterbildung umfassen die alkalisierenden Stoffe ein Alkaliphosphat und/oder Natronlauge. Diese Stoffe dienen zur Vermeidung der Ausbildung eines pH-Wertes des Heizungswassers im sauren Bereich, der die Rostbildung begünstigen würde.

Bei einer Weiterbildung umfassen die Sauerstoffbindemittel Hydrazin, Natriumsulfit, Diethylhydroxylamin, Methylethylketoxim und/oder ein Ascorbat. Die Bindung von Sauerstoff dient zur Verhinderung der Oxidation des Materials der Innenwände der Rohre des Warmwasserkreislaufs.

Bei einer vorteilhaften Weiterbildung umfassen die Dispergiermittel eine Polycarbonsäure und/oder ein Polycarbonsäuresalz. Diese Stoffe dienen zur Vermeidung von Ablagerungen an den Rohrwänden des Warmwasserkreislaufs.

In den Rahmen der vorliegenden Erfindung fällt auch ein Verfahren zur Behandlung von Heizungswasser in einem Warmwasserkreislauf mit der oben beschriebenen Vorrichtung, bei dem die Auslassöffnung des Druckbehälters mit der Einlassöffnung des Adapters verbunden wird und die in dem Druckbehälter befindlichen Härtestabilisationsmittel und/oder Korrosionsschutzmittel nach dem Verbinden vollständig in den Warmwasserkreislauf eingespeist werden. Hierdurch wird eine genaue Dosierung der in den Warmwasserkreislauf eingebrachten Härtestabilisationsmittel und/oder Korrosionsschutzmittel erreicht, wobei auf ein Pumpsystem verzichtet werden kann.

Eine bevorzugte Variante des erfindungsgemäßen Verfahrens ist dadurch gekennzeichnet dass die Härtestabilisationsmittel und/oder Korrosionsschutzmittel beim Einspeisen in den Warmwasserkreislauf 1:25 bis 1:500, vorzugsweise 1:50 bis 1:200 verdünnt werden. Derartige Verdünnungen ermöglichen einerseits, dass die Wirkung der als Härtestabilisationsmittel und/oder Korrosionsschutzmittel wirkenden Chemikalien im Warmwasserkreislauf genügend groß ist, andererseits der Druckbehälter eine handliche Größe besitzt und die Chemikalien zur Wasserbehandlung im Druckbehälter in einer Konzentration vorliegen, bei der es zu keinen unerwünschten Ausfällungen kommt

Bei einer vorteilhaften Variante wird der Adapter über eine bereits vorhandene Füllöffnung direkt an den Warmwasserkreislauf angeschlossen. Dadurch ist kein weiterer Umbau am Heizungssystem notwendig.

In einer alternativen Variante kann der Adapter an ein separat in den Warmwasserkreislauf eingebautes T-Stück angeschlossen werden. Die Heizungsfüllöffnung kann bei dieser Variante über einen Festanschluss mit dem Trinkwassemet zum Be- und Nachfüllen der Heizungsanlage verbunden sein.

Bei einer weiteren Variante wird der Adapter an ein im Warmwasserkreislauf installiertes Wasserbehandlungsgerät angeschlossen, Die Chemikalien werden dann über das Wasserbehandlungsgerät in den Warmwasserkreislauf eingespeist. Das Wasserbehandlungsgerät kann beispielsweise ein rückspülbarer Heizungsfilter sein.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand eines Ausführungsbeispiels näher erläutert.

Es zeigen:
Fig. 1 einen schematischen Vertikalschnitt durch eine Ausführungsform des Adapters der erfindungsgemäßen Vorrichtung; und
Fig. 2 einen Anschluss einer Sprühdose als Druckbehälter an die Füllöffnung eines Heizungs-Warmwasserkreislaufes mittels des Adapters.

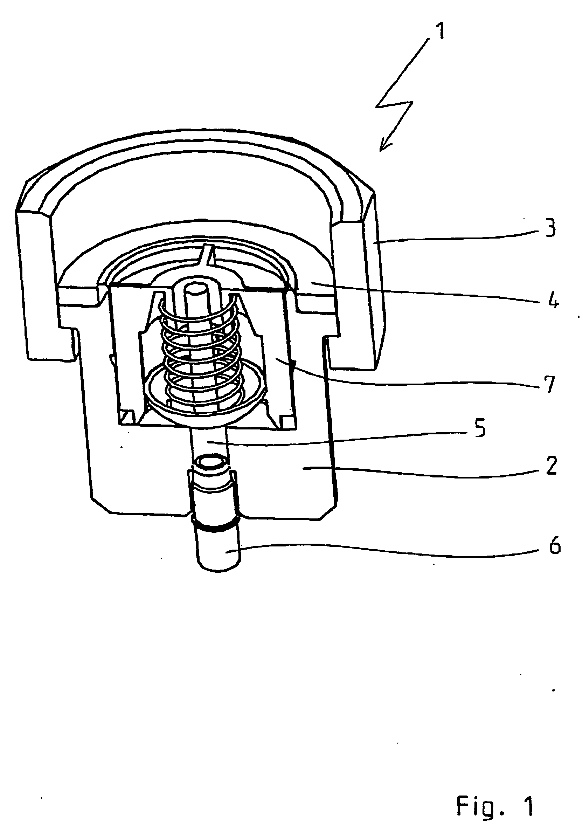

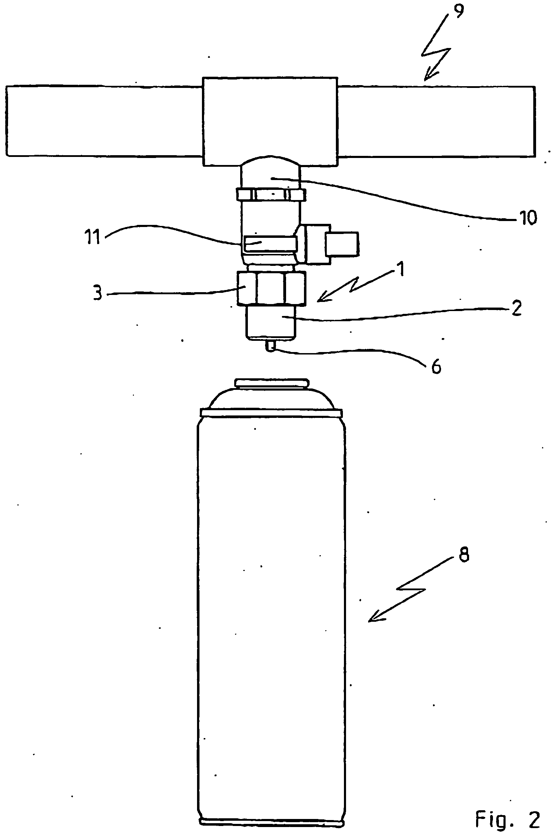

**Fig. 1** zeigt einen Adapter **1**, der ein Gehäuse **2**, einen Anschluss **3** für eine in **Fig. 2** gezeigte Füllöffnung **10** einer Heizungsanlage, ein Dichtelement **4**, eine Ventilöffnung **5**, ein Befüllstutzen **6** zum Anschluss an einen in Fig. 2 gezeigten Druckbehälter **8**, der als Sprühdose ausgelegt ist, sowie einen Rückflussverhinderer **7** umfasst.

Zur Einbringung der im Druckbehälter **8** befindlichen Härtestabilisationsmittel und/oder Korrosionsschutzmittel in den Warmwasserkreislauf **9** einer Heizungsanlage wird der Adapter **1**, wie in Fig. 2 gezeigt, Ober eine Ueberwurfmutter **3** fluiddicht mit der Füllöffnung **10** des Heizungssystems verschraubt. Der Druckbehälter **8** kann nun über den Befüllstutzen **6** fluiddicht auf den Adapter **1** aufgedrückt werden. Dabei öffnet das Rückschlagventil **7** im Adapter **1** sowie das in dem Druckbehälter **8** integrierte Rückschlagventil.

Sobald ein Kugelhahn **11** an der Füllöffnung **10** geöffnet wird, fließen die Härtestabilisationsmittel und/oder Korrosionsschutzmittel zur Behandlung in den Warmwasserkreislauf **9**. Der mittels eines Druckmittels erzeugte Druck in dem Druckbehälter **8** ist hierbei so groß, dass er während des gesamten Zugabevorgangs oberhalb des Betriebsdrucks des Warmwasserkreislaufs **9** liegt. Nach der vollständigen Entleerung wird der Druckbehälter **8** vom Adapter **1** abgezogen und der Kugelhahn **11** wieder verschlossen.

## Patentansprüche

1. Vorrichtung zur Behandlung von Heizungswasser, mit:
einem Warmwasserkreislauf (9), einem Adapter (1) und einem Druckbehälter (8), in dem sich Härtestabilisationsmittel und/oder Korrosionsschutzmittel befinden, wobei der Druckbehälter (8) zum Behandeln des Heizungswassers mit dem Warmwasserkreislauf (9) über den Adapter (1) verbunden ist,
wobei eine Auslassöffnung des Druckbehälters (8) fluiddicht mit einer Einlassöffnung des Adapters (1) verbunden ist, und wobei ein Anfangsfülldruck der Härtestabilisationsmittel und/oder Korrosionsschutzmittel im Druckbehälter (8) vor dem Einbringen der Härtestabilisationsmittel und/oder Korrosionsschutzmittel in den Warmwasserkreislauf (9) bei mindestens 4 bar liegt,
**dadurch gekennzeichnet, dass**
der Druckbehälter (8) so ausgebildet ist, dass
ein Endfülldruck im Druckbehälter (8) nach dem vollständigen Einbringen der Härtestabilisationsmittel und/oder Korrosionsschutzmittel in den Warmwasserkreislauf (9) bei mindestens 2 bar liegt.

2. Vorrichtung nach Anspruch 1,
**dadurch gekennzeichnet,**
**dass** der Anfangsfülldruck bei mindestens 8 bar und der Endfülldruck bei mindestens 3 bar liegt.

3. Vorrichtung nach Anspruch 1 oder 2,
**dadurch gekennzeichnet,**
**dass** der Druckbehälter (8) eine Sprühdose ist, in der die Härtestabilisationsmittel und/oder Korrosionsschutzmittel vom gasförmigen Treibmittel getrennt sind.

4. Vorrichtung nach einem der vorhergehenden Ansprüche,
**dadurch gekennzeichnet,**
**dass** das Volumen des Druckbehälters (8) zwischen 200 ml und 2000 ml, vorzugsweise 400 ml bis 800 ml beträgt.

5. Vorrichtung nach einem der vorhergehenden Ansprüche,
**dadurch gekennzeichnet,**
**dass** sich am Adapter (1) ein Gewinde befindet, das fluiddicht mit einer Öffnung (10) am Warmwasserkreislauf (9) verschraubt werden kann.

6. Vorrichtung nach Anspruch 5,
**dadurch gekennzeichnet,**
**dass** das Gewinde in Form einer Überwurfmutter (3) ausgestaltet ist.

7. Vorrichtung nach einem der Ansprüche 1 bis 4,
**dadurch gekennzeichnet,**
**dass** sich am Adapter (1) ein Flansch zum Anschluss an eine Öffnung (10) des Warmwasserkreislaufs (9) befindet.

8. Vorrichtung nach einem der Ansprüche 1 bis 4,
**dadurch gekennzeichnet,**
**dass** ein Fitting vorgesehen ist, mit dem der Adapter (1) mit einer Öffnung (10) am Warmwasserkreislauf (9) verpresst wird.

9. Vorrichtung nach einem der vorhergehenden Ansprüche,
**dadurch gekennzeichnet,**
**dass** im Adapter (1) ein Rückflussverhinderer (7) angeordnet ist

10. Vorrichtung nach einem der vorhergehenden Ansprüche,
**dadurch gekennzeichnet,**
**dass** an einer Einlassöffnung des Adapters (1) ein Befüllstutzen (6) vorgesehen ist, über den der Adapter (1) mit dem Druckbehälter (8) fluiddicht verbindbar ist.

11. Vorrichtung nach einem der Ansprüche 1 bis 9,
**dadurch gekennzeichnet,**
**dass** an einer Auslassöffnung des Druckbehälters (8) ein Befüllstutzen vorgesehen ist, über den der Adapter (1) mit dem Druckbehälter (8) fluiddicht verbindbar ist.

12. Vorrichtung nach einem der vorhergehenden Ansprüche,
**dadurch gekennzeichnet,**
**dass** der Adapter (1) ein starres Gehäuse (2) aufweist.

13. Vorrichtung nach Anspruch 12,
**dadurch gekennzeichnet,**
**dass** das Gehäuse (2) des Adapters (1) aus einem metallischen Werkstoff oder einem Kunststoff besteht.

14. Vorrichtung nach Anspruch 13,
**dadurch gekennzeichnet,**
**dass** als Gehäuse (2) ein Messingstutzen vorgesehen ist.

15. Vorrichtung nach einem der vorhergehenden Ansprüche,
**dadurch gekennzeichnet,**
**dass** die Härtestabilisationsmittel ein Polyphosphat und/oder ein Phosponat umfassen.

16. Vorrichtung nach einem der vorhergehenden Ansprüche,
**dadurch gekennzeichnet,**
**dass** die Korrosionsschutzmittel mindestens einen Stoff aus den folgenden Stoffgruppen umfassen: Korrosionsinhibitoren, alkalisierende Stoffe, Sauerstoffbindemittel, Dispergiermittel.

17. Vorrichtung nach Anspruch 16,
**dadurch gekennzeichnet,**
**dass** die Korrosionsinhibitoren ein Amin und/oder ein Molybdat umfassen.

18. Vorrichtung nach Anspruch 16,
**dadurch gekennzeichnet,**
**dass** die alkalisierenden Stoffe ein Alkaliphosphat und/oder Natronlauge umfassen.

19. Vorrichtung nach Anspruch 16,
**dadurch gekennzeichnet,**
**dass** die Sauerstoffbindemittel Hydrazin, Natriumsulfit, Diethylhydroxylamin, Methylethylketoxim und/oder ein Ascorbat umfassen.

20. Vorrichtung nach Anspruch 16,
**dadurch gekennzeichnet,**
**dass** die Dispergiermittel eine Polycarbonsäure und/oder ein Polycarbonsäuresalz umfassen.

21. Verfahren zur Behandlung von Heizungswasser in einem Warmwasserkreislauf (9) mit einer Vorrichtung nach einem der vorhergehenden Ansprüche,
**dadurch gekennzeichnet,**
**dass** die Auslassöffnung des Druckbehälters (8) mit der Einlassöffnung des Adapters (1) verbunden wird und die in dem Druckbehälter (8) befindlichen Härtestabilisationsmittel und/oder Korrosionsschutzmittel nach dem Verbinden vollständig in den Warmwasserkreislauf (9) eingespeist werden.

22. Verfahren nach Anspruch 21,
**dadurch gekennzeichnet,**
**dass** die Härtestabilisationsmittel und/oder Korrosionsschutzmittel beim Einspeisen in den Warmwasserkreislauf (9) 1:25 bis 1:500, vorzugsweise 1:50 bis 1:200 verdünnt werden.

23. Verfahren nach Anspruch 21 oder 22,
**dadurch gekennzeichnet,**
**dass** der Adapter (1) über eine Öffnung (10) zum Befüllen der Heizungsanlage mit Wasser mit dem Warmwasserkreislauf (9) verbunden wird.

24. Verfahren nach Anspruch 21 oder 22,
**dadurch gekennzeichnet,**
**dass** der Adapter (1) an ein in den Warmwasserkreislauf (9) eingebautes T-Stück angeschlossen wird.

25. Verfahren nach Anspruch 21 oder 22,
**dadurch gekennzeichnet,**
**dass** der Adapter (1) an ein im Warmwasserkreislauf (9) befindliches Wasserbehandlungsgerät angeschlossen wird.

## Claims

1. Device for treating heating water, comprising:
a hot water circuit (9), an adapter (1), and a pressure container (8) which contains hardness stabilization agents and/or anti-corrosion agents,
wherein the pressure container (8) is connected via the adapter (1) to the hot water circuit (9) for treating the heating water, wherein an outlet opening of the pressure container (8) is connected in a fluid-tight manner to an inlet opening of the adapter (1), and wherein an initial filling pressure of the hardness stabilization agents and/or anti-corrosion agents in the pressure container (8) is at least 4 bar prior to introduction of the hardness stabilization agents and/or anti-corrosion agents into the hot water circuit (9),
**characterized in that** the pressure container is adapted such that a final filling pressure in the pressure container (8) after completed introduction of the hardness stabilization agents and/or anti-corrosion agents into the hot water circuit (9) is at least 2 bar.

2. Device according to claim 1, **characterized in that** the initial filling pressure is at least 8 bar and the final filling pressure is at least 3 bar.

3. Device according to claim 1 or 2, **characterized in that** the pressure container (8) is a spray can in which the hardness stabilization agents and/or anti-corrosion agents are separated from the gaseous propellant.

4. Device according to any one of the preceding claims, **characterized in that** the volume of the pressure container (8) is between 200 ml and 2000 ml, preferably 400 ml to 800 ml.

5. Device according to any one of the preceding claims, **characterized in that** the adapter (1) is provided with a thread which can be screwed to an opening (10) on the hot water circuit (9) in a fluid-tight manner.

6. Device according to claim 5, **characterized in that** the thread is designed in the form of a cap nut (6).

7. Device according to any one of the claims 1 through 4, **characterized in that** the adapter (1) is provided with a flange for connection to an opening (10) of the hot water circuit (9).

8. Device according to any one of the claims 1 through 4, **characterized in that** a fitting is provided by means of which the adapter (1) is compressed with an opening (10) on the hot water circuit (9).

9. Device according to any one of the preceding claims, **characterized in that** a backflow preventer (7) is arranged in the adapter (1).

10. Device according to any one of the preceding claims, **characterized in that** an inlet opening of the adapter (1) is provided with a filler neck (6) via which the adapter (1) can be connected to the pressure container (8) in a fluid-tight manner.

11. Device according to any one of the claims 1 through 9, **characterized in that** an outlet opening of the pressure container (8) is provided with a filler neck via which the adapter (1) can be connected to the pressure container (8) in a fluid-tight manner.

12. Device according to any one of the preceding claims, **characterized in that** the adapter (1) has a rigid housing (2).

13. Device according to claim 12, **characterized in that** the housing (2) of the adapter (1) consists of a metallic material or plastic material.

14. Device according to claim 13, **characterized in that** a connecting piece of brass is provided as housing (2).

15. Device according to any one of the preceding claims, **characterized in that** the hardness stabilization agents comprise a polyphosphate and/or a phosphonate.

16. Device according to any one of the preceding claims, **characterized in that** the anti-corrosion agents comprise at least one substance from the following substance groups: corrosion inhibitors, alkalizing substances, oxygen binders, dispersing agents.

17. Device according to claim 16, **characterized in that** the corrosion inhibitors comprise an amine and/or a molybdate.

18. Device according to claim 16, **characterized in that** the alkalizing substances comprise an alkaline phosphate and/or sodium hydroxide solution.

19. Device according to claim 16, **characterized in that** the oxygen binders comprise hydrazine, sodium sulphite, diethylhydroxylamine, methyl ethyl ketoxime and/or an ascorbate.

20. Device according to claim 16, **characterized in that** the dispersing agents comprise a polycarboxylic acid and/or a polycarboxylic acid salt.

21. Method for the treatment of heating water in a hot water circuit (9) comprising a device according to any one of the preceding claims, **characterized in that** the outlet opening of the pressure container (8) is connected to the inlet opening of the adapter (1) and the hardness stabilization agents and/or anti-corrosion agents contained in the pressure container (8) are fed completely into the hot water circuit (9) after connection.

22. Method according to claim 21, **characterized in that** the hardness stabilization agents and/or anti-corrosion agents are diluted by a factor of 1:25 to 1:500, preferably 1:50 to 1:200 during feeding into the hot water circuit (9).

23. Method according to claim 21 or 22, **characterized in that** the adapter (1) is connected to the hot water circuit (9) via an opening (10) for filling the heating system with water.

24. Method according to claim 21 or 22, **characterized in that** the adapter (1) is connected to a T-piece which is installed in the hot water circuit (9).

25. Method according to claim 21 or 22, **characterized in that** the adapter (1) is connected to a water treatment device located in the hot water circuit (9).

## Revendications

1. Dispositif de traitement de l'eau de chauffage, comprenant :
un circuit d'eau chaude (9), un adaptateur (1) et un récipient sous pression (8) dans lequel se trouvent des agents de stabilisation de dureté et/ou des agents de protection contre la corrosion, le récipient sous pression (8) étant relié au circuit d'eau chaude (9) par l'intermédiaire de l'adaptateur (1) pour le traitement de l'eau de chauffage, une ouverture de sortie du récipient sous pression (8) étant reliée de manière étanche aux fluides à une ouverture d'entrée de adaptateur (1), et une pression de remplissage initiale des agents de stabilisation de dureté et/ou des agents de protection contre la corrosion dans le récipient sous pression (8) avant l'introduction des agents de stabilisation de dureté et/ou des agents de protection contre la corrosion dans le circuit d'eau chaude (9) étant d'au moins 4 bars,
**caractérisé en ce que**
le récipient sous pression est adapté de façon qu'une pression de remplissage finale dans le récipient sous pression (8) après l'introduction complète des agents de stabilisation de dureté et/ou des agents de protection contre la corrosion dans le circuit d'eau chaude (9) soit d'au moins 2 bars.

2. Dispositif selon la revendication 1,
**caractérisé en ce**
**que** la pression de remplissage initiale est d'au moins 8 bars et la pression de remplissage finale d'au moins 3 bars.

3. Dispositif selon l'une des revendications 1 ou 2,
**caractérisé en ce**
**que** le récipient sous pression (8) est une bombe aérosol dans laquelle les agents de stabilisation de dureté et/ou les agents de protection contre la corrosion sont séparés de l'agent propulseur gazeux.

4. Dispositif selon l'une des revendications précédentes,
**caractérisé en ce**
**que** le volume du récipient sous pression (8) est compris entre 200 ml et 2000 ml, de préférence entre 400 ml et 800 ml.

5. Dispositif selon l'une des revendications précédentes,
**caractérisé en ce**
**que** l'adaptateur (1) comporte un filetage qui peut être vissé de manière étanche aux fluides avec une ouverture (10) sur le circuit d'eau chaude (9).

6. Dispositif selon la revendication 5,
**caractérisé en ce**
**que** le filetage est réalisé sous la forme d'un écrou-raccord (3).

7. Dispositif selon l'une des revendications 1 à 4,
**caractérisé en ce**
**que** l'adaptateur (1) comporte une bride pour le raccordement à une ouverture (10) du circuit d'eau chaude (9).

8. Dispositif selon l'une des revendications 1 à 4,
**caractérisé en ce**
**qu'**un raccord est prévu, avec lequel l'adaptateur (1) est assemblé par pression avec une ouverture (10) sur le circuit d'eau chaude (9).

9. Dispositif selon l'une des revendications précédentes,
**caractérisé en ce**
**qu'**un dispositif de non-retour (7) est disposé dans l'adaptateur (1).

10. Dispositif selon l'une des revendications précédentes,
**caractérisé en ce**
**qu'**une tubulure de remplissage (6) est prévue à une ouverture d'entrée de l'adaptateur (1), au moyen de laquelle l'adaptateur (1) peut être relié de manière étanche aux fluides au récipient sous pression (8).

11. Dispositif selon l'une des revendications 1 à 9,
**caractérisé en ce**
**qu'**une tubulure de remplissage est prévue à une ouverture de sortie du récipient sous pression (8), au moyen de laquelle l'adaptateur (1) peut être relié de manière étanche aux fluides au récipient sous pression (8).

12. Dispositif selon l'une des revendications précédentes,
**caractérisé en ce**
**que** l'adaptateur (1) présente un boîtier (2) rigide.

13. Dispositif selon la revendication 12,
**caractérisé en ce**
**que** le boîtier (2) de l'adaptateur (1) est constitué d'un matériau métallique ou d'une matière plastique.

14. Dispositif selon la revendication 13,
**caractérisé en ce**
**qu'**une tubulure en laiton est prévue comme boîtier (2).

15. Dispositif selon l'une des revendications précédentes,
**caractérisé en ce**
**que** les agents de stabilisation de dureté comprennent un polyphosphate et/ou un phosponate.

16. Dispositif selon l'une des revendications précédentes,
**caractérisé en ce**
**que** les agents de protection contre la corrosion comprennent au moins une substance sélectionnée parmi les groupes de substances suivants : inhibiteurs de corrosion, substances alcalinisantes, agents liants d'oxygène, agent dispersants.

17. Dispositif selon la revendication 16,
**caractérisé en ce**
**que** les inhibiteurs de corrosion comprennent une amine et/ou un molybdate.

18. Dispositif selon la revendication 16,
**caractérisé en ce**
**que** les substances alcalinisantes comprennent un phosphate de métal alcalin et/ou de la soude caustique.

19. Dispositif selon la revendication 16,
**caractérisé en ce**
**que** les agents liants d'oxygène comprennent de l'hydrazine, du sulfite de sodium, de la diéthylhydroxylamine, de la méthyléthylcétoxime et/ou un ascorbate.

20. Dispositif selon la revendication 16,
**caractérisé en ce**
**que** les agents dispersants comprennent un acide polycarboxylique et/ou un sel d'acide polycarboxylique.

21. Procédé de traitement de l'eau de chauffage dans un circuit d'eau chaude (9) avec un dispositif selon l'une des revendications précédentes,
**caractérisé en ce**
**que** l'ouverture de sortie du récipient sous pression (8) est relié à l'ouverture d'entrée de l'adaptateur (1) et les agents de stabilisation de dureté et/ou les agents de protection contre la corrosion se trouvant dans le récipient sous pression (8) sont entièrement injectés dans le circuit d'eau chaude (9) après la liaison.

22. Procédé selon la revendication 21,
**caractérisé en ce**
**que** les agents de stabilisation de dureté et/ou les agents de protection contre la corrosion sont dilués dans un rapport de 1:25 à 1:500, de préférence de 1:50 à 1:200 lors de l'injection dans le circuit d'eau chaude (9).

23. Procédé selon l'une des revendications 21 ou 22,
**caractérisé en ce**
**que** l'adaptateur (1) est relié au circuit d'eau chaude (9) par une ouverture (10) destinée au remplissage de l'installation de chauffage avec de l'eau.

24. Procédé selon l'une des revendications 21 ou 22,
**caractérisé en ce**
**que** l'adaptateur (1) est raccordé à une pièce en T montée dans le circuit d'eau chaude (9).

25. Procédé selon l'une des revendications 21 ou 22,
**caractérisé en ce**
**que** l'adaptateur (1) est raccordé à un appareil de traitement de l'eau se trouvant dans le circuit d'eau chaude (9).
